(19) Europäisches Patentamt
European Patent Office
Office européen des brevets

(11) **EP 2 309 252 B1**

(12) **EUROPEAN PATENT SPECIFICATION**

(45) Date of publication and mention of the grant of the patent:
**20.02.2019 Bulletin 2019/08**

(21) Application number: **09794443.3**

(22) Date of filing: **07.07.2009**

(51) Int Cl.:
*G01N 21/3554* *(2014.01)*    *G01N 21/35* *(2014.01)*
*G01N 21/31* *(2006.01)*    *G01N 21/27* *(2006.01)*
*C22B 1/16* *(2006.01)*    *C22B 1/20* *(2006.01)*

(86) International application number:
**PCT/JP2009/062381**

(87) International publication number:
**WO 2010/004999 (14.01.2010 Gazette 2010/02)**

(54) **METHOD FOR MEASURING WATER CONTENT IN A COMPOUND AND WATER CONTENT MEASURING DEVICE**

VERFAHREN ZUR MESSUNG DES WASSERGEHALTS IN EINER VERBINDUNG UND VORRICHTUNG ZUR MESSUNG DES WASSERGEHALTS

PROCÉDÉ DE MESURE DE LA TENEUR EN EAU D UN COMPOSÉ ET DISPOSITIF DE MESURE DE LA TENEUR EN EAU

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.07.2008 JP 2008176786**

(43) Date of publication of application:
**13.04.2011 Bulletin 2011/15**

(73) Proprietor: **Nippon Steel & Sumitomo Metal Corporation**
**Tokyo 100-8071 (JP)**

(72) Inventors:
• **SUGIURA Masato**
  **Tokyo 100-8071 (JP)**
• **YANO Masaki**
  **Tokyo 100-8071 (JP)**
• **MATSUMOTO Shunji**
  **Tokyo 100-8071 (JP)**
• **KUNINAGA Manabu**
  **Tokyo 100-8071 (JP)**

(74) Representative: **Vossius & Partner**
**Patentanwälte Rechtsanwälte mbB**
**Siebertstrasse 3**
**81675 München (DE)**

(56) References cited:
JP-A- 3 231 140        JP-A- 4 083 814
JP-A- 7 198 599        JP-A- 8 136 452
JP-A- 2002 116 142     JP-A- 2003 035 663
JP-A- 2007 114 143     JP-T- 2002 518 670
US-A- 4 266 878        US-A- 5 017 787
US-B1- 6 633 035

## Description

Technical Field

The present invention relates to a method for measuring water content in a compound and a water content measuring device. In particular, the present invention relates to a technique that utilizes absorption of an infrared light by water, and measures water content in a sintering raw material obtained by mixing plural types of pre-mixing raw materials.

The present application claims priority based on Japanese Patent Application No. 2008-176786 filed in Japan on July 7, 2008, the contents of which are cited herein.

Background Art

A sintered ore is manufactured such that two or more types of iron ores as raw materials, and an auxiliary raw material such as a powder coke serving as fuel or limestone are mixed to obtain a sintering raw material, and the thus obtained sintering raw material is sintered in a sintering machine to be a sintered ore. In this specification, the iron ore and the auxiliary raw material before mixture is referred to as a pre-mixing raw material, and the raw material after mixture is referred to as a compound or a sintering raw material.

In a sintering process, water is added to and mixed with the sintering raw material in a mixer, and granulation is performed. Then, the granulated sintering raw material is set in a sintering machine in a layered manner, and a surface thereof is ignited. In the sintering machine, air is drawn from the lower side of the set sintering raw material. This makes it possible to flow the air from the upper side of the sintering raw material to the lower side. Then, a sintering reaction progresses gradually from the surface to the lower side direction while the power coke is burning.

Granulation of the sintering raw material is a process for creating a pseudo particle having a size of about 3-5 mm by using water contained in the sintering raw material as a medium. This pseudo particle has a structure in which fine particles mainly having a diameter of 0.5 mm or less are attached to a core particle having a diameter of 1 mm or more. A granulation state of the sintering raw material is largely affected by the water content. For example, when the water content is not sufficient, fine particles still exist, and ventilation in the sintering machine deteriorates, which reduces the productivity. On the contrary, when the water content is excessive, the binding force between particles decreases, which makes it impossible to create a particle having a desired size. Therefore, in the granulation process of the sintering machine, control of the water content in the sintering raw material is significantly important. In order to maintain the water content in the sintering raw material set in the sintering machine to be constant, it is necessary to measure the water content in the sintering raw material after the granulation on the outlet side of the mixer. Then, the amount of adding water is controlled such that the measured water content in the sintering raw material becomes a target value.

The water content in the iron ore fed from a raw material yard by a conveyor belt is not constant. For example, if rain falls on the raw material stocked in the yard, the water content differs between the surface layer and the inside of the mound in the yard. Therefore, it is desirable that the water content in the sintering raw material be monitored at all times, and that the water content in the sintering raw material be kept constant by changing the amount of water to be added in response to a change in the water content therein. This ensures favorable ventilation within the sintering machine, the stable operations, and the stable sintering quality.

A dry mass method is a method for measuring the water content accurately and reliably. This method is implemented such that a sample of the sintering raw material is collected from a feeding line, and the collected sample is completely dried by a dryer provided with an atmosphere heating chamber or infrared lamp. Then, the mass of the sample of the sintering raw material is measured and compared before and after drying, thereby to obtain information about the water content contained in the sample of the sintering raw material. However, in the case of the dry mass method, the sample collecting operation and a drying time (30 minutes to two hours) are necessary, and the measurement is made intermittently. Further, the time delay for obtaining the measurement value is extremely large.

As a method for measuring the water content in a measurement target object online without collecting the sample of the sintering raw material, there exists a water-content measurement method that utilizes an infrared water content tester. This method is implemented such that an infrared light is irradiated on a surface of the measurement target object, and the reflected light is observed. If water exists on an optical path of the infrared light, the infrared light having a specific wavelength is absorbed in accordance with the water content, and the spectral reflectance at this wavelength decreases. By utilizing this phenomenon, the water content in the measurement target object is measured. This method provides an advantage in which continuous measurement can be implemented contactlessly, and the water content in the measurement target object can be obtained without a time delay.

A 3-wavelength type infrared water content tester will be described in detail. With the 3-wavelength type infrared water content tester, a wavelength range in the vicinity of 1.9 $\mu$m to 2.0 $\mu$m is employed as a wavelength "$\lambda_W$" absorbed by water. Reference wavelengths ("$\lambda_L$", "$\lambda_S$") are set on the longer wavelength side and the shorter wavelength side of

the wavelength "$\lambda_W$" absorbed by water, respectively. The reference wavelengths ("$\lambda_L$" "$\lambda_S$") are selected as close to the absorption wavelength "$\lambda_W$" as possible, such that the selected wavelengths are not affected by the water content.

Spectral reflectances "$r_W$", "$r_L$", and "$r_S$" of the measurement target object are measured with the three wavelengths "$\lambda_W$", "$\lambda_L$", and "$\lambda_S$". Base on the measured "$r_L$" and "$r_S$", a reference spectral reflectance "$r_{W0e}$" of the measurement target object at the wavelength "$\lambda_W$" is calculated. In this specification, the reference spectral reflectance of the measurement target object is a calculated value on the assumption that this reference spectral reflectance is a spectral reflectance of the measurement target object in a dry state and at a wavelength "$\lambda_W$". In general, when a point ($\lambda_S$, $r_S$) and a point ($\lambda_L$, $r_L$) are connected with a straight line in a relation diagram between the wavelength and the spectral reflectance, a value at the wavelength "$\lambda_W$" on the straight line is considered to be "$r_{W0e}$". That is, "$r_{W0e}$" can be expressed by the following expression (2). From "$r_W$" and "$r_{W0e}$", an absorbance "k" of the measurement target object can be obtained by the following expression (3); the thus obtained absorbance "k" of the measurement target object is substituted into a predetermined linear expression, for example, into the following expression (4); and a water content "w" in the measurement target object can be obtained.

$$a = k/w \quad (1)$$

$$r_{W0e} = r_S + (\lambda_W - \lambda_S) \times (r_L - r_S)/(\lambda_L - \lambda_S) \quad (2)$$

$$k = -\ln(r_W/r_{W0e}) \quad (3)$$

$$k = a \times w + b \quad (4)$$

In the expressions described above, the "w" is a water content (indicated by mass% in general) in the measurement target object. The "k" is an absorbance of the measurement target object. The "a" and "b" are constants depending on properties of the measurement target object. When the constants "a" and "b" corresponding to the measurement target object are not accurate, errors occur at the time of measuring the water content.

The relationship between the water content "w" in the measurement target object and the infrared absorbance "k" by water varies depending on a type of the measurement target object. One reason for this is that a penetration depth of the infrared light varies depending on the type of substance. Further, another reason is the difference between the water content in the vicinity of a surface layer of the measurement target object to be observed by the infrared light and the total water content in the measurement target object, which is caused by the water absorption properties of the measurement target object and the like. For the reasons described above, the infrared absorbance "$k_C$" by the water and the water content "$w_C$" are experimentally measured in advance on the sample of the measurement target object. Then, based on this measurement results, the relationship between the absorbance "k" and the water content "w" of the measurement target object can be established as expressed by the expression (4). The relational expression between the absorbance "k" and the water content "w" is called a calibration curve.

When the water content is measured on the sintering raw material as the measurement target object by using the 3-wavelength type infrared water content tester, the relationship (calibration curve) between the water content "w" and the absorbance "k" of the sintering raw material varies depending on the change of mixture of the sintering raw material thereafter or the like, even if the constants "a" and "b" in the above-described expression (4) are experimentally obtained in advance. Therefore, it is necessary to perform the measurement while timely correcting the relationship between "w" and "k", namely, the calibration curve based on the actual measurement results, in order to accurately measure the water content "w" in the sintering raw material by using the 3-wavelength type infrared water content tester.

Patent Document 1 describes that, at the time of measuring water content in a powdery substance outdoors by using an infrared water content tester, measurement variation caused by variation in atmospheric humidity cannot be ignored. In this respect, Patent Document 1 discloses a method for measuring the atmospheric humidity on a measurement optical path of an infrared light, and correcting water content values measured with the infrared light according to the measured humidity values. More specifically, the constant "b" in the above-described expression (4) varies according to the measured humidity values.

Patent Document 2 discloses a method for measuring water content in a sintered ore raw material by using an infrared water content tester, in which the water content tester is calibrated every time a mixture is changed, since properties of the mixed raw materials slightly differ for each change of mixture of the raw materials. More specifically, a correction value is automatically calculated using a statistical technique based on a deviation of an indicated water content from a target value for the water content obtained by a water content controlling device, and a drift (corresponding to variation of the "b" in the above-described expression (4)) of the value of the water content is corrected by a zero-drift operation.

Patent Document 3 discloses a method for measuring water content in a sintering raw material using an infrared light, in which, every time a mixture of sintering raw materials is changed, the water content is precisely measured immediately after the change by using absolute-dry-type water content measurement unit, and is made to correspond to a water content value measured at the same time by infrared absorption. Then, based on both of the resulting values measured for a predetermined number of times, a new calibration curve is calculated with a linear regression. In the embodiment thereof, the predetermined number of times is set at 5-6 times in general.

Patent Document 4 describes a desk-top type infrared radiation moisture measuring apparatus of a type in which the moisture in a specimen is exposed to a measurement light easily absorbed into water and to at least one reference light not noticeably absorbed into water and calculation is performed to determine the moisture in the specimen on the basis of both the measurement light and the reference light, reflected from the specimen. The apparatus comprises a turntable on which the specimen is placed and which is exposed to both the measurement light and the reference light from above at a portion away from the center thereof, and a drive source for driving the turntable into rotation. The measurement is carried out while the turntable is being rotated.

Related Art Documents

Patent Documents

Patent Document 1: Japanese Unexamined Patent Application, First Publication No. S59-72047
Patent Document 2: Japanese Unexamined Patent Application, First Publication No. S62-839
Patent Document 3: Japanese Unexamined Patent Application, First Publication No. H6-34532
Patent Document 4: US 5 017 787 A

Disclosure of the Invention

Problems to be Solved by the Invention

It was found that the measurement variation caused by variation in the atmospheric humidity is not important when the water content "w" in the sintering raw material which has been mixed is obtained by the infrared measurement.

On the other hand, as described in Patent Documents 2 and 3, when the mixture of the sintering raw material is changed, the relationship between the absorbance "k" and the water content "w" measured by the infrared water content tester varies. Therefore, in such a case that the mixture of the raw materials is changed, it is necessary to immediately correct the relationship between the absorbance "k" and the water content "w", namely, the calibration curve. Here, it was found that the variation of the relationship between "k" and "w" (calibration curve) at the time of change of mixture of the raw materials leads not only to the variation in the constant "b" in the above-described expression (4), but also to variation in the constant "a". Therefore, it was found that the water content cannot be measured accurately when drift adjustment is carried out on the assumption that only the constant "b" varies as is the case with the invention described in Patent Document 2. Further, even when off-line measurement is implemented with the dry mass method for a predetermine number of times and the linear regression is carried out as described in Patent Document 3, it is impossible to obtain a water content shift sufficient for obtaining the accurate linear regression because the water content in the sintering raw material is not sufficiently changed in a short period of time. Yet further, it requires time to implement the measurement with the dry mass method for a predetermine number of times, and hence, it is difficult to make correction rapidly.

An object of the present invention is to provide a method for measuring water content and a water content measuring device that, at the time of measuring the water content in a compound by utilizing absorption of an infrared light by water, can accurately measure the water content "w" in the compound at all times by immediately correcting the relationship (calibration curve) between the absorbance "k" and the water content "w" even if the mixed raw material is changed.

Means for Solving the Problems

The present invention employs the following measures for solving the problems described above.

(1) A method for measuring a water content in a compound using a 3-wavelength type infrared water content tester according to appended claim 1. The expression k = aw + b, which is a relational expression between a water content w and an absorbance k of the compound may be used.

(2) The method for measuring a water content in a compound according to (1) described above includes: assuming long-wavelength-side reference wavelength candidates $\lambda_L$', which are candidates for the long-wavelength-side reference wavelength $\lambda_L$; measuring an absorbance $k_0$ on each of the pre-mixing raw materials in a state where water has been removed, for each case where each of the long-wavelength-side reference wavelength candidates $\lambda_L$' is used; calculating an average value of sums of squares of $k_0$, which is a value obtained by dividing sums of squares of the absorbances $k_0$ of the respective pre-mixing raw materials by the number of the pre-mixing raw materials, for each case where each of the long-wavelength-side reference wavelength candidates $\lambda_L$' is used; and selecting one of the long-wavelength-side reference wavelength candidates $\lambda_L$' that makes the average value of sums of squares of $k_0$ less than or equal to 0.001 as the long-wavelength-side reference wavelength $\lambda_L$, from among the long-wavelength-side reference wavelength candidates $\lambda_L$'.

(3) In the method for measuring a water content in a compound according to (2) described above, one of the long-wavelength-side reference wavelength candidates $\lambda_L$' that makes the average value of sums of squares of $k_0$ have the smallest value may be selected as the long-wavelength-side reference wavelength $\lambda_L$.

(4) The method for measuring a water content in a compound according to (2) described above may further includes: assuming long-wavelength-side reference wavelength candidates $\lambda_L$', which are candidates for the long-wavelength-side reference wavelength $\lambda_L$; assuming short-wavelength-side reference wavelength candidates $\lambda_S$', which are candidates for the short-wavelength-side reference wavelenght $\lambda_S$; assuming reference wavelength combination candidates, each of the reference wavelength combination being obtained by combining each of the long-wavelength-side reference wavelength candidates $\lambda_L$' and each of the short-wavelength-side reference wavelength candidates $\lambda_S$'; measuring the absorbance $k_0$ on each of the pre-mixing raw materials in a state where water has been removed, for each case where each of the reference wavelength combination candidates is used; calculating an average value of sums of squares of $k_0$, which is a value obtained by dividing sums of squares of the absorbances $k_0$ of the respective pre-mixing raw materials by the number of the pre-mixing raw materials, for each case where each of the reference wavelength combination candidates is used; and selecting one of the reference wavelength combination candidates that makes the average value of sums of squares of $k_0$ less than or equal to 0.001 as the reference wavelength combination, from among the reference wavelength combination candidates.

(5) In the method for measuring a water content in a compound according to (4) described above, one of the reference wavelength combination candidates that makes the average value of sums of squares of $k_0$ have the smallest value may be selected as the reference wavelength combination, from among the reference wavelength combination candidates.

(6) In the method for measuring a water content in a compound according to (1) described above, the reference wavelength combination may be selected by using band-pass filters that allow specific wavelengths to pass through.

(7) In the method for measuring a water content in a compound according (1) described above, the reference wavelength combination may be selected based on a result of an infrared spectroscopy measurement with continuous wavelengths.

(8) In the method for measuring a water content in a compound according to (1) described above, the compound may be a sintering raw material; the wavelength $\lambda_W$ absorbed by water may fall in a range of 1.9 $\mu$m to 2.0 $\mu$m; and the long-wavelenght-side reference wavelenght $\lambda_L$ may be selected form a wavelenght range of 2.2 $\mu$m to 2.4 $\mu$m.

(9) In the method for measuring a water content in a compound according to (8) described above, the short-wavelength-side reference wavelength $\lambda_S$ may be selected from a wavelength range of 1.6 $\mu$m to 1.8 $\mu$m.

(10) The method for measuring a water content in a compound according to (1) described above may include: measuring an absorbance $k_C$ of a sample of the compound; measuring a water content $w_C$ in the sample of the compound by a dry mass method; calculating a proportionality factor a by dividing the absorbance $k_C$ of the sample of the compound by the water content $w_C$ in the sample of the compound; and calculating the water content w in the compound by dividing the absorbance k of the compound by the proportionality factor a.

(11) A water content measuring device for a compound according to appended claim 10.

(12) In the water content measuring device according to (11) described above, the short-wavelength-side reference wavelength $\lambda_S$ may be selected from a wavelength range of 1.6 $\mu$m to 1.8 $\mu$m.

(13) A method for measuring water content in a compound, which uses the water content measuring device according to (11) described above according to an aspect of the present invention may include: calculating a proportionality factor a by dividing an absorbance $k_C$ of a sample of the compound measured in advance by a water content $w_C$ in the sample of the compound measured in advance by using a dry mass method; and measuring an absorbance k on a given compound and measuring a water content w in the compound by dividing the absorbance k by the proportionality factor a.

Effects of the Invention

According to the item (1) described above, the relationship between the absorbance "k" and the water content "w" may exhibit a linear expression that passes through the vicinity of the original point, and hence, by measuring the water content offline only one time on the sample of the compound by the dry mass method after change of mixture of raw materials, it is possible to create a calibration curve from the measured water content "$w_C$" and the infrared absorbance "$k_C$". Specifically, the calibration curve can be corrected accurately and rapidly. This makes it possible to precisely measure the water content "w" in the compound through infrared measurement in a continuous manner.

According to the item (2) described above, it is possible to select a preferable long-wavelength-side reference wavelength "$\lambda_L$'.

According to the item (3) described above, it is possible to select an optimum long-wavelength-side reference wavelength "$\lambda_L$".

According to the item (4) described above, it is possible to select a preferable reference wavelength combination.

According to the item (5) described above, it is possible to select an optimum reference wavelength combination.

According to the item (6) described above, it is possible to select a preferable reference wavelength with a simple configuration.

According to the item (7) described above, it is possible to accurately select a preferable reference wavelength.

According to the items (8) and (9) described above, the effect same as (1) described above can be obtained because the relationship between the absorbance "k" and the water content "w" of the sintering material exhibits a linear expression passing through the vicinity of the original point.

According to the item (10) described above, it is possible to accurately and rapidly measure the water content in the sintering raw material.

Brief Description of the Drawings

FIG. 1 is a diagram illustrating a relationship between the water content (%) measured by a dry mass method and absorbance "k" measured by an infrared water content tester for each pre-mixing raw material A, B, C and D;

FIG. 2A is a diagram illustrating a spectral reflectance measured with a wavelength in a continuous infrared range in a state where the pre-mixing raw material A is dried;

FIG. 2B is a diagram illustrating a spectral reflectance measured with a wavelength in a continuous infrared range in a state where the pre-mixing raw material B is dried;

FIG. 2C is a diagram illustrating a spectral reflectance measured with a wavelength in a continuous infrared range in a state where the pre-mixing raw material C is dried;

FIG. 3 is a diagram for comparing an average of sums of squares of absorbance "$k_0$" on seven types of pre-mixing raw materials in a dried state, for each combination of reference wavelength ("$\lambda_S$", "$\lambda_L$").

FIG. 4 is a diagram illustrating evaluation results of absorbance "$k_0$" on the respective pre-mixing raw materials in the dried state, and illustrates a case where the wavelengths of "$\lambda_S$" = 1.7 μm and "$\lambda_{S''}$" = 2.3 μm are employed (painted-out square), and a case where the wavelengths of "$\lambda_S$" = 1.8 μm and "$\lambda_L$" = 2.1 μm are employed (not-painted-out square);

FIG. 5 is a diagram illustrating a relationship between the water content "w" evaluated by the dry mass method and the absorbance "k" obtained through the infrared spectroscopy measurement on the sintering raw materials α, β, and γ after mixture in a case where the wavelengths of "$\lambda_S$" = 1.8 μm and "$\lambda_L$" = 2.1 μm are employed;

FIG. 6 is a diagram illustrating a relationship between the water content "w" evaluated by the dry mass method and the absorbance "k" obtained through the infrared spectroscopy measurement on the sintering raw materials α, β, and γ after mixture in a case where the wavelengths of "$\lambda_{S''}$" = 1.7 μm and "$\lambda_L$" = 2.3 μm are employed; and

FIG. 7 is a schematic diagram illustrating a water content measuring device for the sintering raw material according to the present invention.

Embodiments of the Invention

When the water content "w" in the compound (sintering raw material) is measured by utilizing absorption of an infrared light by water, both of the constants "a" and "b" in the expression (4), which express the relationship (calibration curve) between "k" and "w", vary at the time of change of mixture of raw materials, as described above. Therefore, in order to correctly obtain the constants "a" and "b" after the change of mixture of raw materials, it is necessary to collect two or more samples of the compound having different water content, and measure the water content "$w_C$" and the absorbance "$k_C$" on the respective samples. With this measurement, two or more measurement values on the different water content can be obtained, whereby the correct constants "a" and "b" after the change of mixture of raw materials can be obtained.

If the "b" in the expression (4) remains unchanged while the "a" in the expression (4) varies when the mixture of raw materials is changed, only the constant "a" is a constant that needs to be corrected. Therefore, it is only necessary to obtain one pair of the absorbance "$k_C$" and the true value of the water content "$w_C$" measured on the sample of the compound after change of raw materials.

Conventionally, in the measurement using the 3-wavelength type infrared water content tester, reference wavelengths of "$\lambda_S$" = 1.8 $\mu$m and "$\lambda_L$" = 2.1 $\mu$m are used as fixed values at the time of measuring the water content "w" in the sintering raw material by using an absorption band around 1.9 $\mu$m as the water absorption wavelength "$\lambda_W$". In this case, as a result of calculation of reference spectral reflectance "$r_{W0e}$" by using the expression (2) described above on the basis of the spectral reflectances "$r_S$", "$r_L$" measured on the sintering raw material, it was revealed that the calculated reference spectral reflectance "$r_{W0e}$" is not matched with the true spectral reflectance "$r_{W0a}$" measured on the sintering raw material having been dried to be a dry state. Further, the difference between "$r_{W0e}$" and "$r_{W0a}$" varies according to the iron ore raw material before mixture or the sintering raw material after mixture.

In this respect, if the reference spectral reflectance "$r_{W0e}$" can be matched with the true spectral reflectance "$r_{W0a}$" measured in the dried state and the absorbance "k" is calculated by using the expression (3) described above, the absorbance "k" is zero when the water content "w" is zero, and as a result, the relationship between the absorbance "k" and the water content "w" can be expressed as follow:

$$ k = a \times w \quad (5). $$

More specifically, the "b" in the expression (4) is zero. In this case, the constant "a" is only the constant that needs to be set, and the constant "a" can be set by implementing the dry-mass-method water-content measurement only one time on the sample of the sintering raw material after change of mixture of raw materials. Further, it has been found that, by appropriately selecting the reference wavelengths "$\lambda_S$", "$\lambda_L$", it is possible to preferably match "$r_{W0e}$" and "$r_{W0a}$".

Note that, in this specification, the description "b is zero" means that, if the "b" is assumed to be zero, the resulting effect falls within allowable error in the water content measurement.

Hereinbelow, an embodiment of the present invention will be described by assuming the sintering raw material as the measurement target object. However, the applicable target of the present invention is not limited to the measurement of the water content in the sintering raw material. For example, the present invention is applicable for a method for measuring water content in the compound obtained by mixing plural pre-mixing raw materials.

Currently, in the measurement using the general infrared water content tester, settings are made such that the water absorption wavelength "$\lambda_W$" is 1.96 $\mu$m, the short-wavelength-side reference wavelength "$\lambda_S$" is 1.8 $\mu$m, and the long-wavelength-side reference wavelength "$\lambda_L$" is 2.1 $\mu$m.

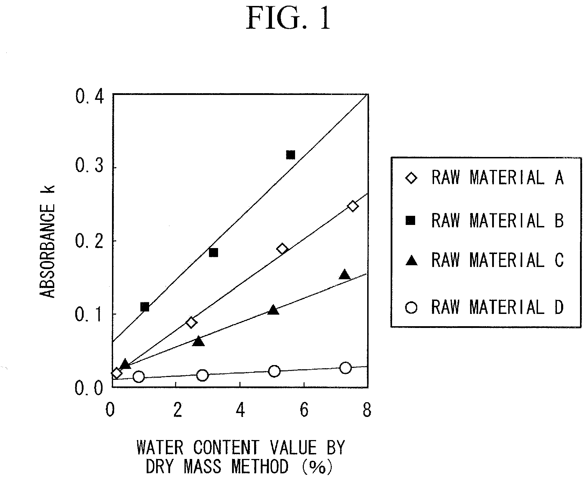

On four types A, B, C and D of pre-mixing raw materials before mixture, the absorbances "k" are measured by using the infrared water content tester, and are compared with the water content "w" measured on the same samples by the dry mass method. By using the generally used infrared water content tester, the reference spectral reflectance "$r_{W0e}$" is calculated by the expression (2) described above, and the absorbance "k" is calculated by the expression (3) described above. FIG. 1 shows results obtained by comparing the relationships between the measured water content "w" and the calculated absorbance "k". The relationship between the absorbance "k" and the water content "w" using the dry mass method exhibits a linear relationship for each of the types A, B, C and D of the pre-mixing raw materials. By expressing the lines using the expression (4) described above, it is obvious that, for each of the types A, B, C and D of the pre-mixing raw materials, gradients "a" of the lines differ, and values "b" of the intercepts with respect to the vertical axis also differ. The sintering raw material is obtained by mixing the several types from among the types A, B, C and D of the pre-mixing raw materials, and hence, in a case where the water content in the sintering raw material after mixture is measured using the infrared water content tester, both of the gradient "a" and the value "b" of the intercept in the relationship between the water content and the absorbance "k" measured using the infrared water content tester vary according to the mixture condition. Further, it was revealed that the relationship between the water content "w" and the absorbance "k" of the sintering raw material after mixture is not matched with that obtained by adding up the relationships of the respective types before mixture in accordance with the mixture proportion. It is assumed that this is because the water in the sintering raw material after mixture is not uniformly distributed, and the water is absorbed unevenly by the material type having favorable water absorbency.

Therefore, in order to precisely measure the water content in the sintering raw material by using the infrared water content tester, it is necessary to rapidly correct the relationship (calibration curve) between the water content "w" and the absorbance "k" by the infrared water content tester of the sintering raw material after change of mixture, every time the mixture proportion or the mixed material type changes. At the time of the correction, it is necessary to correct the intercept "b" with respect to the vertical axis as well as the gradient "a" in a case where the relationship between the water content "w" and the absorbance "k" of the sintering raw material is expressed by a linear expression such as the expression (4) described above. In order to correct both the "a" and the "b", it is necessary to measure the water content "$w_C$" using the dry mass method and measure the absorbance "$k_C$" using the infrared water content tester, on two or more samples of the sintering raw materials having different water content, to prepare two or more pairs of the measurement values. However, it is difficult to rapidly obtain such measurement values.

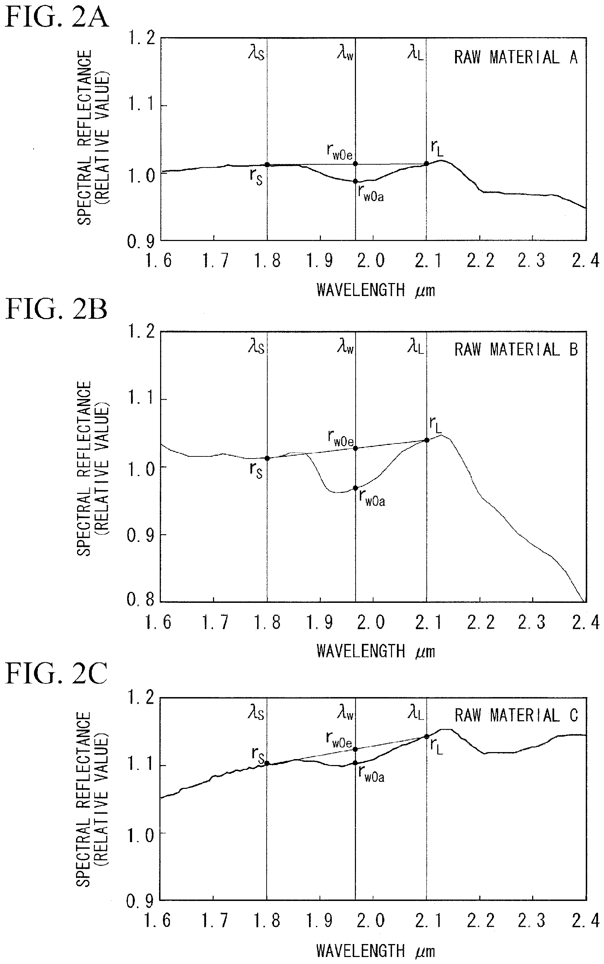

Next, by using the infrared water content tester, the spectral reflectance "$r_{W0a}$" is measured on the pre-mixing raw materials A, B, C in the completely dried state. Specifically, measurement is performed by using a FT-IR infrared spectrometer at a continuous infrared range wavelength (in a range of 1.6 $\mu$m to 2.4 $\mu$m). The results are shown in FIGS. 2A, 2B and 2C.

With reference to FIGS. 2A, 2B and 2C, spectral reflectances measured at the wavelength of 1.96 $\mu$m (that is, the wavelength "$\lambda_W$" absorbed by water) are obtained. The obtained spectral reflectances are true spectral reflectances "$r_{W0a}$" of the pre-mixing raw materials A, B, C in the completely dried state. Further, with reference to FIGS. 2A, 2B and 2C, spectral reflectances "$r_S$", "$r_L$" measured at the wavelengths of 1.8 $\mu$m (that is, short-wavelength-side reference wavelength "$\lambda_S$") and of 2.1 $\mu$m (that is, long-wavelength-side reference wavelength "$\lambda_L$") are obtained. FIGS. 2A, 2B and 2C show the reference spectral reflectances "$r_{W0e}$" obtained by connecting a line between the spectral reflectances "$r_S$", "$r_L$" at each of the reference wavelengths described above. These reference spectral reflectances "$r_{W0e}$" are equal to "$r_{W0e}$" calculated by the expression (2).

As can be clearly understood from FIGS. 2A, 2B and 2C, the pre-mixing raw materials have its own formation spectrums (for example, specific spectral characteristic spectrum in a case of iron ore), and thus, it is obvious that the true reference spectral reflectances "$r_{W0a}$" in the dried state is deviated from the reference spectral reflectance "$r_{W0e}$". In particular, a of the deviation is in type B of the pre-mixing raw material. As a result, it is found that the absorbance is not zero even if the water content is made zero.

Considering the facts described above, studies were made on whether the reference wavelengths can be selected such that the true reference spectral reflectance "$r_{W0a}$" in the dried state and the reference spectral reflectance "$r_{W0e}$" are matched as much as possible, rather than fixing the reference wavelengths at 1.8 $\mu$m on the short wavelength side and 2.1 $\mu$m on the long wavelength side. If the reference wavelengths described above can be selected, the relationship between the absorbance "k" and the water content "w" accords with a straight line extending from the origin point, and hence, the relational expression (calibration curve) between "w" and "k" can be expressed by k = a $\times$ w. The constant "a" is the only unknown constant. Accordingly, by changing (re-setting) the gradient "a" of the calibration curve by assuming, to be the true value, the water content value "$w_C$" measured on the sample of the pre-mixing raw material by the dry mass method and intermittently obtained, it is possible to improve the measurement accuracy of the infrared water content tester. Specifically, as the correct calibration curve can be obtained, the water content "w" in the compound can be precisely determined on the basis of the measured absorbance "k" of the compound.

It should be noted that, when the water content is measured on the sintering raw material obtained by mixing plural pre-mixing raw materials (iron ore or auxiliary raw material), the reference wavelengths are selected such that the spectral reflectance "$r_{W0a}$" and the reference spectral reflectance "$r_{W0e}$" are matched as much as possible, by paying attention not only to a specific pre-mixing raw material but also to almost all the pre-mixing raw materials. For the reason described above, preferable reference wavelengths are found by using the following methods. Seven types (A-G) of primary pre-mixing raw materials used for forming the sintering raw material are selected as samples of the pre-mixing raw materials. These samples of the pre-mixing raw materials are dried so that the water content therein is made to be zero. The wavelength "$\lambda_W$" absorbed by water is 1.96 $\mu$m. Candidates for a short-wavelength-side reference wavelength "$\lambda_S$" are 1.6 $\mu$m, 1.7 $\mu$m, and 1.8 $\mu$m. Candidates for a long-wavelength-side reference wavelength "$\lambda_L$" are 2.1 $\mu$m, 2.2 $\mu$m, 2.3 $\mu$m, and 2.4 $\mu$m. Then, at each of the candidates for wavelengths of "$\lambda_S$" and "$\lambda_L$", the spectral reflectances ("$r_S$", "$r_L$", respectively) are measured. The absorbance "$k_0$" of each of the samples of the pre-mixing raw materials is calculated by the following expression (3)' on the basis of the true spectral reflectances "$r_{W0a}$" measured at the wavelength "$\lambda_W$" in the dried state and the reference spectral reflectance "$r_{W0e}$" calculated by the (2).

$$k_0 = -\ln(r_{W0a}/r_{W0e}) \qquad (3)'$$

In a case of the dried state, zero is substituted for "w" in the expression (4), and hence, "$k_0$" is equal to "b".

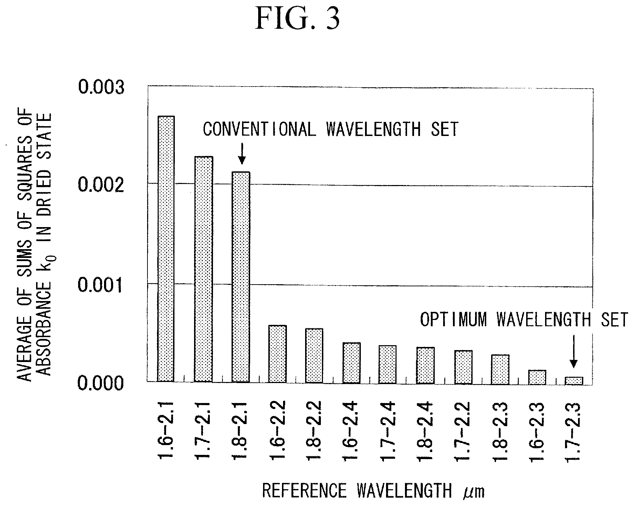

Next, calculation was made on the seven types of the primary pre-mixing raw materials to obtain squares of the thus obtained absorbances "$k_0$" of the pre-mixing raw materials. All of the squares of the absorbances "$k_0$" were added to obtain a sum of the squares. Then, the obtained sum of the squares is divided by the number of the pre-mixing raw materials to obtain an average value of the sum of the squares. FIG. 3 shows the calculated average of the sums of the squares for each combination of "$\lambda_S$" and "$\lambda_L$". In FIG. 3, the values of the average of the sums of the squares are plotted in the decreasing order toward the right direction. As can be clearly understood from FIG. 3, the average of the sums of the squares of the absorbance "$k_0$" is the greatest in a case where the long-wavelength-side reference wavelength "$\lambda_L$" is 2.1 $\mu$m (the value currently used in the ordinary infrared water content tester). This results from the fact that a small peak (shape thereof varies depending on the types of the sintering raw materials) exists in the vicinity of 2.1 $\mu$m of the reflectance spectrum of each of the sintering raw materials, as can be seen in FIG. 2. On the other hand, the average of the sums of the squares of the "$k_0$" is the smallest in a case where the short-wavelength-side reference wavelength "$\lambda_S$" is 1.7 $\mu$m and the long-wavelength-side reference wavelength "$\lambda_L$" is 2.3 $\mu$m. The reference wavelengths for the respective plural types of the pre-mixing raw materials are selected by evaluating the average of the sums of the squares of the "$k_0$". According to the present disclosure it may be possible to select the preferable reference wavelengths, for example, by evaluating the total sum of the absolute values of "$k_0$", the sum of biquadratic values of "$k_0$" or the like. Further, in a case where there exist a pre-mixing raw material whose mixture proportion is always high or is always low, the preferable reference wavelength can be selected by calculating the sum of the squares thereof while weighting in accordance with the mixture proportion thereof.

It should be noted that, in a case where the measurement target object is the sintering raw material, it is possible to maintain the average of the sums of the squares of the "$k_0$" within an extremely lower level of 0.001 or lower, if the long-wavelength-side reference wavelength "$\lambda_L$" falls within a range of 2.2 $\mu$m to 2.4 $\mu$m. Further, even if the short-wavelength-side reference wavelength "$\lambda_S$" falls within any wavelength value ranging from 1.6 $\mu$m to 1.8 $\mu$m, it is possible to lower the average of the sums of the squares of the "$k_0$", provided that the long-wavelength-side reference wavelength "$\lambda_L$" falls within a range of 2.2 $\mu$m to 2.4 $\mu$m.

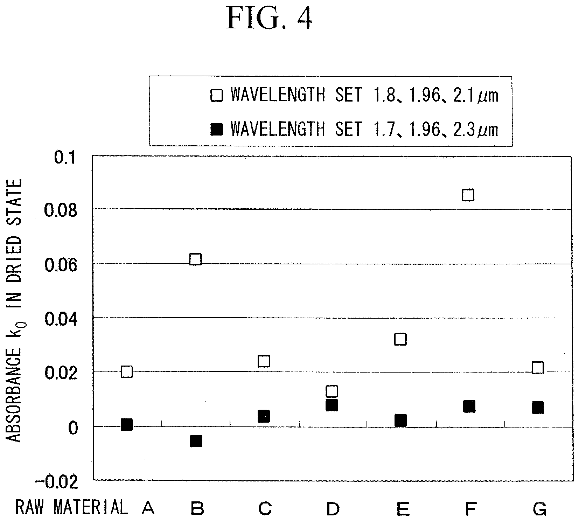

FIG. 4 shows absorbances "$k_0$" according to the expression (3)' described above on the respective pre-mixing raw materials A-G, in a case where the wavelengths of "$\lambda_S$" = 1.8 $\mu$m and "$\lambda_L$" = 2.1 $\mu$m are employed, and a case where the wavelengths of "$\lambda_S$" = 1.7 $\mu$m and "$\lambda_L$" = 2.3 $\mu$m are employed. "$\lambda_W$" is 1.96 $\mu$m in each case. As can be clearly understood from FIG. 4, it is obvious that the absorbance "$k_0$", that is, the "b" in the expression (4) takes extremely small values in any iron ore types in a case where the wavelengths of "$\lambda_S$" = 1.7 $\mu$m and "$\lambda_L$" = 2.3 $\mu$m are employed (painted-out square in FIG. 4), as compared with a case where the wavelengths of "$\lambda_S$" = 1.8 $\mu$m and "$\lambda_L$" = 2.1 $\mu$m are employed (not-painted-out square in FIG. 4).

Next, a comparison was made between the absorbance "k" having "$\lambda_S$" and "$\lambda_L$" changed and the water content "w" measured by the dry mass method on the sintering raw material obtained by mixing plural pre-mixing raw materials, rather than on the individual types of raw materials before mixture.

Three types of sintering raw materials (after mixture) (sample names: $\alpha$, $\beta$, $\gamma$) were prepared by changing pre-mixing raw materials to be mixed and the mixture volumes thereof. For the three types of the sintering raw materials, samples of the sintering raw materials were prepared such that the water content thereof are varied in a range of 0-7%. The samples of the respective sintering raw materials were evaluated in terms of the water content "w" by the dry mass method.

In the water-content measurement using infrared with "$\lambda_W$" of 1.96 $\mu$m, the absorbance "k" is evaluated in a case where the wavelengths of "$\lambda_S$" = 1.8 $\mu$m and "$\lambda_L$" = 2.1 $\mu$m are employed, and a case where the wavelengths of "$\lambda_S$" = 1.7 $\mu$m and "$\lambda_L$" = 2.3 $\mu$m are employed. At the time of evaluation of the absorbance "k", the expressions (2) and (3) are employed.

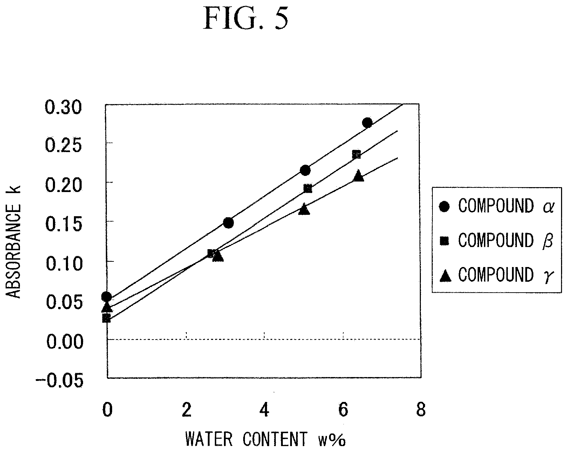

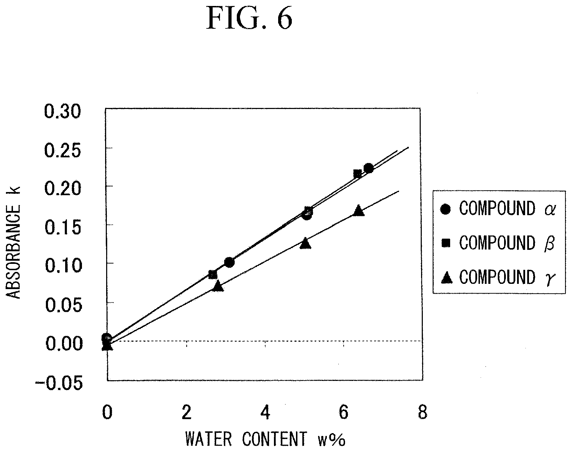

A comparison was made among the sintering raw materials $\alpha$, $\beta$, and $\gamma$ after mixture, by setting the horizontal axis to the water content "w" evaluated using the dry mass method, and setting the vertical axis to the absorbance "k" obtained by the water-content measurement using infrared. FIG. 5 shows a case of employing the conventionally used ordinary wavelength set of "$\lambda_S$" = 1.8 $\mu$m and "$\lambda_L$" = 2.1 $\mu$m. FIG. 6 shows a case of employing the wavelength set of "$\lambda_S$" = 1.7 $\mu$m and "$\lambda_L$" = 2.3 $\mu$m that exhibits the smallest average value of the sum of the squares of the absorbance "k" in the dried state at the time of evaluation for each pre-mixing raw material. From FIG. 5, it can be known that both the gradient "a" and the intercept "b" in the relationship between the water content "w" and the absorbance "k" of the sintering raw material (after mixture) vary depending on the types of the sintering raw materials. On the other hand, from FIG. 6, it can be known that, although the gradient "a" changes as the types of the sintering raw material (after mixture) changes, the relationship between the water content and the absorbance passes through the origin point in any of the sintering raw materials.

More specifically, it can be known that the relationship between the absorbance "k" and the water content "w" (calibration curve) is always on a straight line passing through the vicinity of the original point even if the sintering raw material obtained by mixing the plural pre-mixing raw materials are employed as the measurement target, by drying the plural pre-mixing raw materials to remove water therein; measuring the absorbance "$k_0$" on the pre-mixing raw materials from which water has been removed; calculating the average of the sums of the squares of the measured absorbance "$k_0$" of the plural pre-mixing raw material; selecting the reference wavelengths "$\lambda_S$" and "$\lambda_L$" such that the average of the sums of the squares of the "$k_0$" is a small value; and making a water-content measurement using infrared. Considering the allowable measurement error, it is possible to regard the "b" in the calibration curve k = aw + b as zero. As a result, by obtaining one data set formed by the water content "$w_C$" evaluated on the sintering raw material after change of mixture by using the dry mass method and the absorbance "$k_C$" evaluated by the infrared absorbing method at the time when the type or proportion of the pre-mixing raw materials changes, the "a" can be calculated using the expression (1) described above on the basis of the one data set. Then, the expression (5) described above is corrected on the basis of the thus obtained "a", whereby the water content "w" in the sintering raw material can be precisely measured by using the expression (5) described above. The allowable measurement error concerning the "b" will be described below. In FIG. 6, although the "b" is positioned in the vicinity of zero regardless of mixture, the "b" falls in a range of $0 \pm 0.005$ to be precise. This uncertainty of 0.005 corresponds to the error of 0.2% in the measurement of water content. Therefore, if the error allowable in the measurement of water content is 0.2%, it does not practically causes any problem even if the "b" is regarded as zero. As described above, the fact that the "b" is less than or equal to the allowable measurement error indicates that, if the "b" is regarded as zero, the resulting effect falls within the range of the allowable error that can be accepted at the time of measurement of water content.

The average of the sums of the squares of the absorbances "$k_0$" can be 1/2 or lower as compared with that of the conventional technique, and the water content can be precisely measured, by selecting the "$\lambda_S$" and "$\lambda_L$" such that the average of the sums of the squares of the absorbances "$k_0$" is 0.001 or lower at the time when the absorbances "$k_0$" are measured on the plural pre-mixing raw materials from which water has been removed and the "$\lambda_S$" and "$\lambda_L$" are selected such that the average of the sums of the squares of the absorbances "$k_0$" is small.

Further, of the "$\lambda_S$" and "$\lambda_L$", the "$\lambda_L$" has greater effect on the accuracy of measurement of the water content in the sintering raw material. Therefore, it may be possible to employ the conventionally used value for the "$\lambda_S$", and select the "$\lambda_L$" that makes the average of the sums of the squares of the absorbances "$k_0$" small to optimize only the "$\lambda_L$".

Yet further, by selecting a combination of the reference wavelengths that makes the average of the sums of the squares of the absorbances "$k_0$" have the smallest value, it is possible to obtain the most favorable result.

In order to select the optimum "$\lambda_L$" or optimum combination of "$\lambda_S$" and "$\lambda_L$", it is necessary to calculate the reference spectral reflectance "$r_{W0e}$" at the wavelength of "$\lambda_W$" on plural wavelengths "$\lambda_L$" or plural combinations of "$\lambda_S$" and "$\lambda_L$", and obtain the absorbance "$k_0$" on the basis of "$r_{W0a}$" and "$r_{W0e}$" actually measured on the samples of the dried pre-mixing raw materials. At this time, band-pass filters corresponding to the respective wavelengths may be used to measure the spectral reflectances at the "$\lambda_S$" and "$\lambda_L$". For the band-pass filters, it may be possible to employ filters that allow infrared light having the wavelengths described above $\pm 0.05$ $\mu$m to pass through.

Alternatively, rather than using the band-pass filter, it is possible to select the optimum "$\lambda_L$" or the optimum combination of "$\lambda_S$" and "$\lambda_L$", by performing infrared spectroscopy measurement with continuous wavelengths; and reading the spectral reflectances "$r_L$", "$r_S$" at predetermined "$\lambda_S$" and "$\lambda_L$" on the basis of the results of the infrared spectroscopy measurement with continuous wavelengths. At the time of performing the infrared spectroscopy measurement with continuous wavelengths, a FT-IR spectrophotometer may be used for example.

As can be clearly understood from the detailed description above, the present disclosure is configured such that, when the water content in the sintering raw material is measured by the infrared water content tester, appropriate wavelength is used as the long-wavelength-side reference wavelength "$\lambda_L$" by selecting from the wavelength range of 2.2 $\mu$m to 2.4 $\mu$m. This makes it possible to make the relationship (calibration curve) between the water content "w" and the absorbance "k" pass through the vicinity of the original point in any of the sintering raw materials--although the gradient in the relationship (calibration curve) between the water content "w" and the absorbance "k" varies--even if the mixture condition of the sintering raw material is changed.

Therefore, it is possible to measure the water content in the sintering raw material more favorably than the conventional technique, by a method for measuring the water content in the sintering raw material, which includes irradiating infrared light onto the sintering raw material; detecting the reflected light thereof; and measuring the water content "w" in the sintering raw material by utilizing the absorption of the infrared light by water, the method being characterized by: measuring the reference spectral reflectances "$r_W$", "$r_L$", and "$r_S$" using three wavelengths of the wavelength "$\lambda_W$" absorbed by water, the long-wavelength-side reference wavelength "$\lambda_L$" longer than the "$\lambda_W$" and the short-wavelength-side reference wavelength "$\lambda_S$" shorter than the "$\lambda_W$" ; calculating the reference spectral reflectance "$r_{W0e}$" at the wavelength "$\lambda_W$" on the basis of the "$r_L$" and "$r_S$"; obtaining the absorbance "k" of the sintering raw material on the basis of the "$r_W$" and the "$r_{W0e}$"; calculating the water content "w" in the sintering raw material on the basis of the relationship (calibration curve) between the water content "w" and the absorbance "k" obtained on the basis of the water content "$w_C$" and the absorbance "$k_C$" of the sample of the sintering raw material measured in advance using the dry mass method and the like, in which an absorption wavelength falling in the wavelength range of 1.9 to 2.0 $\mu$m is employed as the "$\lambda_W$"; and a wavelength selected from the wavelength range of 2.2 $\mu$m to 2.4 $\mu$m is employed as the "$\lambda_L$".

In the method according to the present disclosure, at the time of calculating the water content "w" in the sintering raw material from the relationship between the water content "w" and the absorbance "k" obtained on the basis of the water content "$w_C$" and the absorbance "$k_C$" of the sample of the compound measured in advance, it is possible to calculate the water content in the sintering raw material by dividing the absorbance "k" by a proportionality factor a because the relationship between the water content "w" and the absorbance "k" passes through the vicinity of the original point. Note that use of the dry mass method is preferable to measure the water content "w" in the sample of the compound in advance.

In the example described above, it may be possible to employ a wavelength selected from the wavelength range of 1.6 $\mu$m to 1.8 $\mu$m as the short-wavelength-side reference wavelength "$\lambda_S$", rather than employing the conventionally used "$\lambda_S$".

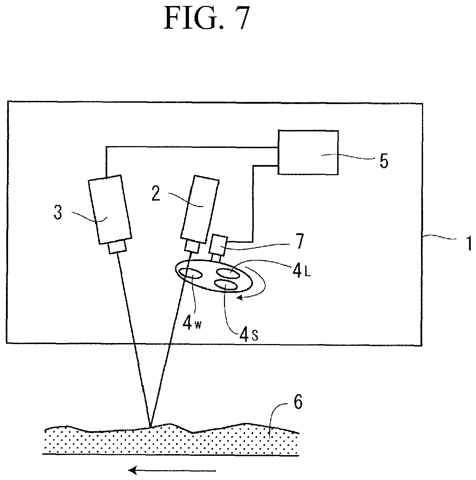

Next, a water content measuring device for the sintering raw material according to the present disclosure, which realizes the method for measuring the water content according to the present disclosure, will be described with reference to FIG. 7.

A water content measuring device 1 according to the present disclosure, which measures the water content in a sintering raw material by utilizing absorption of an infrared light by water, has a light source 2 that irradiates, onto the sintering raw material, a first infrared light having a wavelength "$\lambda_W$" absorbed by water, a second infrared light having a wavelength "$\lambda_L$" longer than the wavelength "$\lambda_W$", and a third infrared light having a wavelength "$\lambda_S$" shorter than the wavelength "$\lambda_W$"; a detector 3 that detects reflected lights of the first to third infrared lights; a band-pass filter 4 that allows the infrared lights having the three wavelengths of the wavelength "$\lambda_W$", the wavelength "$\lambda_L$" and the wavelength "$\lambda_S$" to pass through; and a calculation unit 5. Spectral reflectances "$r_W$", "$r_L$", and "$r_S$" of the sintering raw material can be obtained by using the band-pass filters 4 ($4_W$, $4_L$, $4_S$) corresponding to the wavelength "$\lambda_W$" absorbed by water, the long-wavelength-side reference wavelength "$\lambda_L$", and the short-wavelength-side reference wavelength "$\lambda_S$" respectively. The calculation unit 5 calculates a reference spectral reflectance "$r_{W0e}$" at the wavelength "$\lambda_W$" on the basis of "$r_L$" and "$r_S$"; obtains absorbance "k" on the basis of "$r_W$" and "$r_{W0e}$"; and calculates the water content "w" in the sintering raw material from a relationship between the water content "w" and the absorbance "k" on the basis of the water content "$w_C$" and the absorbance "$k_C$" of a sample of the sintering raw material measured in advance. As the "$\lambda_W$", absorption wavelength that falls within a wavelength range of 1.9 $\mu$m to 2.0 $\mu$m is employed, and as the "$\lambda_L$", a wavelength selected from a wavelength range of 2.2 $\mu$m to 2.4 $\mu$m is employed.

With the above-described water content measuring device for the sintering raw material according to the present disclosure, the relationship between the water content "w" and the absorbance "k" passes through the vicinity of the original point in any sintering raw material 6. At the time of selecting the three band-pass filters 4 ($4_W$, $4_L$, $4_S$), a band-pass filter selection device 7 that utilizes rotation of a motor may be employed.

In the above-described water content measuring device for the sintering raw material according to the present disclosure, it may be possible to employ a wavelength selected from a range of 1.6 $\mu$m to 1.8 $\mu$m as the "$\lambda_S$".

Industrial Applicability

According to the method for measuring the water content in a compound (or sintering raw material) and a water content measuring device of the present disclosure as described above that selects the appropriate reference wavelengths, a relationship between absorbance "k" with infrared analysis and the water content "w" can be expressed by a linear expression passing through the vicinity of the original point at all times even if a type or mixture proportion of pre-mixing raw materials for the sintering raw material after a mixture is changed. Specifically, at the time of calculating the water content in the sintering raw material from a calibration curve obtained from the water content "$w_C$" and the absorbance "$k_C$" of a sample of the sintering raw material measured in advance, it is possible to calculate the water content in the sintering raw material by dividing the absorbance "k" by a proportionality factor a because the relationship between the water content "w" and the absorbance "k" passes through the vicinity of the original point. Therefore, for any sintering raw material, it is possible to maintain the measurement accuracy of the method for measuring the water content and the water content measuring device according to the present invention to be accurate at all times, by measuring the water content "$w_C$" using the dry mass method and the absorbance "$k_C$" on the sintering raw material set in a sintering machine at a predetermined timing in a day, for example, and calculating the proportionality factor a by the expression (1) described above.

Reference Signs List

1    Water content measuring device
2    Light source
3    Detector
4    Band-pass filter
5    Calculation unit
6    Sintering raw material
7    Band-pass filter selection device

**Claims**

1. A method for measuring a water content in a compound using a 3-wavelength type infrared water content tester, wherein

 the method uses a reference wavelength combination of a long-wavelength-side reference wavelength $\lambda_L$ which is longer than a wavelength $\lambda_W$ absorbed by water and a short-wavelength-side reference wavelength $\lambda_S$ shorter than the wavelength $\lambda_W$, wherein the long-wavelength-side reference wavelength $\lambda_L$ is obtained by:

 assuming long-wavelength-side reference wavelength candidates $\lambda_L'$, which are candidates-for the long-wavelength-side reference wavelength $\lambda_L$;
 measuring an absorbance $k_0$ on each of the pre-mixing raw materials in a state where water has been removed, at each of the long-wavelength-side reference wavelength candidates $\lambda_L'$ ;
 calculating an average value of sums of squares of $k_0$, which is a value obtained by dividing sums of squares of the absorbances $k_0$ of the respective pre-mixing raw materials by the number of the pre-mixing raw materials, at each of the long-wavelength-side reference wavelength candidates $\lambda_L'$; and
 selecting one of the long-wavelength-side reference wavelength candidates $\lambda_L'$ that makes the average value of sums of squares of $k_0$ less than or equal to 0.001 as the long-wavelength-side reference wavelength $\lambda_L$, from among the long-wavelength-side reference wavelength candidates $\lambda_L'$.

2. The method for measuring a water content in a compound according to claim 1, wherein
 one of the long-wavelength-side reference wavelength candidates $\lambda_L'$ that makes the average value of squares of $k_0$ have the smallest value is selected as the long-wavelength-side reference wavelength $\lambda_L$.

3. The method for measuring a water content in a compound according to claim 1, further comprising:

 assuming long-wavelength-side reference wavelength candidates $\lambda_L'$, which are candidates for the long-wavelength-side reference wavelength $\lambda_L$;
 assuming short-wavelength-side reference wavelength candidates $\lambda_S'$, which are candidates for the short-wavelength-side reference wavelength $\lambda_S$;
 assuming reference wavelength combination candidates, each of the reference wavelength combination candidates being obtained by combining each of the long-wavelength-side reference wavelength candidates $\lambda_L'$ and each of the short-wavelength-side reference wavelength candidates $\lambda_S'$;
 measuring the absorbance $k_0$ on each of the pre-mixing raw materials in a state where water has been removed, for each case where each of the reference wavelength combination candidates is used;
 calculating an average value of sums of squares of $k_0$, which is a value obtained by dividing sums of squares of the absorbances $k_0$ of the respective pre-mixing raw materials by the number of the pre-mixing raw materials, for each case where each of the reference wavelength combination candidates is used; and
 selecting one of the reference wavelength combination candidates that makes the average value of sums of squares of $k_0$ less than or equal to 0.001 as the reference wavelength combination, from among the reference wavelength combination candidates.

4. The method for measuring a water content in a compound according to claim 3, wherein
 one of the reference wavelength combination candidates that makes the average value of sums of squares of $k_0$ have the smallest value is selected as the reference wavelength combination, from among the reference wavelength combination candidates.

5. The method for measuring a water content in a compound according to claim 1, wherein
 the reference wavelength combination is selected by using band-pass filters that allow specific wavelengths to pass through.

6. The method for measuring a water content in a compound according to claim 1, wherein
 the reference wavelength combination is selected based on a result of an infrared spectroscopy measurement with continuous wavelengths.

7. The method for measuring a water content in a compound according to claim 1, wherein
 the compound is a sintering raw material;
 the wavelength $\lambda_W$ absorbed by water falls in a range of 1.9 $\mu$m to 2.0 $\mu$m; and
 the long-wavelength-side reference wavelength $\lambda_L$ is selected from a wavelength range of 2.2 $\mu$m to 2.4 $\mu$m.

**EP 2 309 252 B1**

8. The method for measuring a water content in a compound according to claim 7, wherein
the short-wavelength-side reference wavelength $\lambda_S$ is selected from a wavelength range of 1.6 $\mu$m to 1.8 $\mu$m.

9. The method for measuring a water content in a compound according to claim 1, the method comprising:

measuring an absorbance $k_C$ of a sample of the compound;
measuring a water content $w_C$ in the sample of the compound by a dry mass method;
calculating a proportionality factor a by dividing the absorbance $k_C$ of the sample of the compound by the water content $w_C$ in the sample of the compound; and
calculating the water content w in the compound by dividing the absorbance k of the compound by the proportionality factor a.

10. A water content measuring device (1) for a compound, comprising:

a light source (2) that irradiates an infrared light onto the compound;
band-pass filters (4) that respectively transmit a wavelength $\lambda_W$ absorbed by water, a long-wavelength-side reference wavelength $\lambda_L$ longer than the wavelength $\lambda_W$, and a short-wavelength-side reference wavelength $\lambda_S$ shorter than the wavelength $\lambda_W$; a detector (3) that detects reflected infrared light having passed through said band-pass filters; and
a calculation unit (5) that calculates spectral reflectances $r_W$, $r_L$, $r_S$ of the infrared light based on the reflected infrared light detected at $\lambda_w$, $\lambda_L$ and $\lambda_S$, that calculates a reference spectral reflectance $r_{W0e}$ based on the spectral reflectance $r_L$ and the spectral reflectance $r_S$, that calculates an absorbance k of the compound based on the spectral reflectance $r_W$ and the reference spectral reflectance $r_{W0e}$, and that calculates a water content w in the compound from a relationship between the water content w and the absorbance k of the compound prepared based on a water content $w_C$ and an absorbance $k_C$ of a sample of the compound measured in advance, wherein
the compound is a sintering raw material (6);
the wavelength $\lambda_W$ absorbed by water falls in a range of 1.9 $\mu$m to 2.0 $\mu$m;
the long-wavelength-side reference wavelength $\lambda_L$ is selected from a wavelength range of 2.2 $\mu$m to 2.4 $\mu$m; and
wherein the long-wavelength-side reference wavelength $\lambda_L$ is obtained by:

assuming long-wavelength-side reference wavelength candidates $\lambda_L$', which are candidates for the long-wavelength-side reference wavelength $\lambda_L$;
measuring an absorbance $k_0$ on each of the pre-mixing raw materials in a state where water has been removed at each of the long-wavelength-side reference wavelength candidates $\lambda_L$';
calculating an average value of sums of squares of $k_0$, which is a value obtained by dividing sums of squares of the absorbances $k_0$ of the respective pre-mixing raw materials by the number of the pre-mixing raw materials, at each of the long-wavelength-side reference wavelength candidates $\lambda_L$'; and
selecting one of the long-wavelength-side reference wavelength candidates $\lambda_L$' that makes the average value of sums of squares of $k_0$ less than or equal to 0.001 as the long-wavelength-side reference wavelength $\lambda_L$, from among the long-wavelength-side reference wavelength candidates $\lambda_L$'.

11. The water content measuring device according to claim 10, wherein
the short-wavelength-side reference wavelength $\lambda_S$ is selected from a wavelength range of 1.6 $\mu$m to 1.8 $\mu$m.

12. A method for measuring water content in a compound, which uses the water content measuring device according to claim 10, the method comprising:

calculating a proportionality factor a by dividing an absorbance $k_C$ of a sample of the compound measured in advance by a water content $w_C$ in the sample of the compound measured in advance by using a dry mass method; and
measuring an absorbance k on a given compound and measuring a water content w in the compound by dividing the absorbance k by the proportionality factor a.

**Patentansprüche**

1. Verfahren zum Messen eines Wassergehalts in einer Verbindung mittels eines 3-Wellenlängen-Infrarot-Wassergehaltsprüfgeräts, wobei

das Verfahren eine Bezugswellenlängenkombination einer langwellenlängenseitigen Bezugswellenlänge $\lambda_L$, die länger als eine Wellenlänge $\lambda_W$ ist, die durch Wasser absorbiert wird, und einer kurzwellenlängenseitigen Bezugswellenlänge $\lambda_S$ verwendet, die kürzer als die Wellenlänge $\lambda_W$ ist, wobei die langwellenlängenseitige Bezugswellenlänge $\lambda_L$ erhalten wird durch:

Voraussetzen von langwellenlängenseitigen Bezugswellenlängenkandidaten $\lambda_L'$, die Kandidaten für die langwellenlängenseitige Bezugswellenlänge $\lambda_L$ sind;
Messen eines Absorptionsvermögens ko an jedem der Rohmaterialien vor Mischung in einem Zustand, in dem Wasser entfernt worden ist, bei jedem der langwellenlängenseitigen Bezugswellenlängenkandidaten $\lambda_L'$;
Berechnen eines Mittelwerts der Quadratsummen von $k_0$, der ein Wert ist, der durch Dividieren der Quadratsummen der Absorptionsvermögen $k_0$ der jeweiligen Rohmaterialien vor Mischung durch die Anzahl der Rohmaterialien vor Mischung erhalten wird, bei jedem der langwellenlängenseitigen Bezugswellenlängenkandidaten $\lambda_L'$; und
Auswählen von einem der langwellenlängenseitigen Bezugswellenlängenkandidaten $\lambda_L'$, der den Mittelwert der Quadratsummen von $k_0$ kleiner oder gleich 0,001 werden lässt, als die langwellenlängenseitige Bezugswellenlänge $\lambda_L$ aus den langwellenlängenseitigen Bezugswellenlängenkandidaten $\lambda_L'$.

2. Verfahren zum Messen eines Wassergehalts in einer Verbindung nach Anspruch 1, wobei
einer der langwellenlängenseitigen Bezugswellenlängenkandidaten $\lambda_L'$, der den Mittelwert der Quadratsummen von $k_0$ den kleinsten Wert annehmen lässt, als die langwellenlängenseitige Bezugswellenlänge $\lambda_L$ ausgewählt wird.

3. Verfahren zum Messen eines Wassergehalts in einer Verbindung nach Anspruch 1, das ferner aufweist:

Voraussetzen von langwellenlängenseitigen Bezugswellenlängenkandidaten $\lambda_L'$, die Kandidaten für die langwellenlängenseitige Bezugswellenlänge $\lambda_L$ sind;
Voraussetzen von kurzwellenlängenseitigen Bezugswellenlängenkandidaten $\lambda_S'$, die Kandidaten für die kurzwellenlängenseitige Bezugswellenlänge $\lambda_S$ sind;
Voraussetzen von Bezugswellenlängenkombinationskandidaten, wobei jeder der Bezugswellenlängenkombinationskandidaten durch Kombinieren von jedem der langwellenlängenseitigen Bezugswellenlängenkandidaten $\lambda_L'$ und jedem der kurzwellenlängenseitigen Bezugswellenlängenkandidaten $\lambda_S'$ erhalten wird;
Messen des Absorptionsvermögens $k_0$ an jedem der Rohmaterialien vor Mischung in einem Zustand, in dem Wasser entfernt worden ist, für jeden Fall, bei dem jeder der Bezugswellenlängenkombinationskandidaten verwendet wird;
Berechnen eines Mittelwerts der Quadratsummen von $k_0$, der ein Wert ist, der durch Dividieren der Quadratsummen der Absorptionsvermögen $k_0$ der jeweiligen Rohmaterialien vor Mischung durch die Anzahl der Rohmaterialien vor Mischung erhalten wird, für jeden Fall, bei dem jeder der Bezugswellenlängenkombinationskandidaten verwendet wird; und
Auswählen von einem der Bezugswellenlängenkombinationskandidaten, der den Mittelwert der Quadratsummen von $k_0$ kleiner oder gleich 0,001 werden lässt, als die Bezugswellenlängenkombination aus den Bezugswellenlängenkombinationskandidaten.

4. Verfahren zum Messen eines Wassergehalts in einer Verbindung nach Anspruch 3, wobei
einer der Bezugswellenlängenkombinationskandidaten, der den Mittelwert der Quadratsummen von $k_0$ den kleinsten Wert annehmen lässt, als die Bezugswellenlängenkombination aus den Bezugswellenlängenkombinationskandidaten ausgewählt wird.

5. Verfahren zum Messen eines Wassergehalts in einer Verbindung nach Anspruch 1, wobei
die Bezugswellenlängenkombination durch Verwenden von Bandpassfiltern ausgewählt wird, die spezifische Wellenlängen durchgehen lassen.

6. Verfahren zum Messen eines Wassergehalts in einer Verbindung nach Anspruch 1, wobei
die Bezugswellenlängenkombination beruhend auf einem Resultat einer Infrarotspektroskopiemessung mit kontinuierlichen Wellenlängen ausgewählt wird.

7. Verfahren zum Messen eines Wassergehalts in einer Verbindung nach Anspruch 1, wobei
die Verbindung ein gesintertes Rohmaterial ist;
die durch Wasser absorbierte Wellenlänge $\lambda_W$ in einen Bereich von 1,9 $\mu$m bis 2,0 $\mu$m fällt; und

die langwellenlängenseitige Bezugswellenlänge $\lambda_L$ aus einem Wellenlängenbereich von 2,2 μm bis 2,4 μm ausgewählt wird.

8. Verfahren zum Messen eines Wassergehalts in einer Verbindung nach Anspruch 7, wobei die kurzwellenlängenseitige Bezugswellenlänge $\lambda_S$ aus einem Wellenlängenbereich von 1,6 μm bis 1,8 μm ausgewählt wird.

9. Verfahren zum Messen eines Wassergehalts in einer Verbindung nach Anspruch 1, wobei das Verfahren aufweist:

Messen eines Absorptionsvermögens $k_C$ einer Probe der Verbindung;
Messen eines Wassergehalts $w_C$ in der Probe der Verbindung durch ein Trockenmasseverfahren;
Berechnen eines Proportionalitätsfaktors a durch Dividieren des Absorptionsvermögens $k_C$ der Probe der Verbindung durch den Wassergehalt $w_C$ in der Probe der Verbindung; und
Berechnen des Wassergehalts w in der Verbindung durch Dividieren des Absorptionsvermögens k der Verbindung durch den Proportionalitätsfaktor a.

10. Vorrichtung (1) zur Messung des Wassergehalts für eine Verbindung, die aufweist:

eine Lichtquelle (2), die ein Infrarotlicht auf die Verbindung strahlt;
Bandpassfilter (4), die jeweils eine Wellenlänge $\lambda_W$, die durch Wasser absorbiert wird, eine langwellenlängenseitige Bezugswellenlänge $\lambda_L$, die länger als die Wellenlänge $\lambda_W$ ist, und eine kurzwellenlängenseitige Bezugswellenlänge $\lambda_S$ durchlassen, die kürzer als die Wellenlänge $\lambda_W$ ist;
einen Detektor (3), der reflektiertes Infrarotlicht detektiert, das durch die Bandpassfilter gegangen ist; und
eine Berechnungseinheit (5), die spektrale Reflexionsgrade $r_W$, $r_L$, $r_S$ des Infrarotlichts beruhend auf dem reflektierten Infrarotlicht berechnet, das bei $\lambda_W$, $\lambda_L$ und $\lambda_S$ detektiert wird, die eine spektralen Bezugsreflexionsgrad $r_{W0e}$ beruhend auf dem spektralen Reflexionsgrad $r_L$ und dem spektralen Reflexionsgrad rs berechnet, die ein Absorptionsvermögen k der Verbindung beruhend auf dem spektralen Reflexionsgrad rw und dem spektralen Bezugsreflexionsgrad $r_{W0e}$ berechnet, und die einen Wassergehalt w in der Verbindung aus einer Beziehung zwischen dem Wassergehalt w und dem Absorptionsvermögen k der Verbindung berechnet, die beruhend auf einem Wassergehalt wc und einem Absorptionsvermögen kc einer Probe der Verbindung vorbereitet wird, die im Voraus gemessen werden, wobei
die Verbindung ein gesintertes Rohmaterial (6) ist;
die durch Wasser absorbierte Wellenlänge $\lambda_W$ in einen Bereich von 1,9 μm bis 2,0 μm fällt;
die langwellenlängenseitige Bezugswellenlänge $\lambda_L$ aus einem Wellenlängenbereich von 2,2 μm bis 2,4 μm ausgewählt wird; und
wobei die langwellenlängenseitige Bezugswellenlänge $\lambda_L$ erhalten wird durch:

Voraussetzen von langwellenlängenseitigen Bezugswellenlängenkandidaten $\lambda_L'$, die Kandidaten für die langwellenlängenseitige Bezugswellenlänge $\lambda_L$ sind;
Messen eines Absorptionsvermögens $k_0$ an jedem der Rohmaterialien vor Mischung in einem Zustand, in dem Wasser entfernt worden ist, bei jedem der langwellenlängenseitigen Bezugswellenlängenkandidaten $\lambda_L'$;
Berechnen eines Mittelwerts der Quadratsummen von $k_0$, der ein Wert ist, der durch Dividieren der Quadratsummen der Absorptionsvermögen $k_0$ der jeweiligen Rohmaterialien vor Mischung durch die Anzahl der Rohmaterialien vor Mischung erhalten wird, bei jedem der langwellenlängenseitigen Bezugswellenlängenkandidaten $\lambda_L'$; und
Auswählen von einem der langwellenlängenseitigen Bezugswellenlängenkandidaten $\lambda_L'$, der den Mittelwert der Quadratsummen von $k_0$ kleiner oder gleich 0,001 werden lässt, als die langwellenlängenseitige Bezugswellenlänge $\lambda_L$ aus den langwellenlängenseitigen Bezugswellenlängenkandidaten $\lambda_L'$.

11. Vorrichtung zur Messung des Wassergehalts nach Anspruch 10, wobei die kurzwellenlängenseitige Bezugswellenlänge $\lambda_S$ aus einem Wellenlängenbereich von 1,6 μm bis 1,8 μm ausgewählt wird.

12. Verfahren zum Messen des Wassergehalts in einer Verbindung, die die Vorrichtung zur Messung des Wassergehalts nach Anspruch 10 verwendet, wobei das Verfahren aufweist:

Berechnen eines Proportionalitätsfaktors a durch Dividieren eines im Voraus gemessenen Absorptionsvermögens kc einer Probe der Verbindung durch einen Wassergehalt wc in der Probe der Verbindung, der mittels eines Trockenmasseverfahrens im Voraus gemessen wird; und

Messen eines Absorptionsvermögens k an einer gegebenen Verbindung und Messen eines Wassergehalts w in der Verbindung durch Dividieren des Absorptionsvermögens k durch den Proportionalitätsfaktor a.

**Revendications**

1. Procédé de mesure de teneur en eau d'un composé au moyen d'un dispositif infrarouge de mesure de la teneur en eau à 3 longueurs d'onde, où

   ledit procédé recourt à une combinaison de longueurs d'onde de référence, associant une longueur d'onde de référence $\lambda_L$ du côté des longueurs d'ondes longues, laquelle est supérieure à une longueur d'onde $\lambda_W$ absorbée par l'eau, à une longueur d'onde de référence $\lambda_S$ du côté des longueurs d'ondes courtes, laquelle est inférieure à la longueur d'onde $\lambda_W$, la longueur d'onde de référence $\lambda_L$ du côté des longueurs d'ondes longues étant obtenue par :

   la supposition de candidats $X_L$' de longueur d'onde de référence du côté des longueurs d'ondes longues, lesquels sont des candidats pour la longueur d'onde de référence $\lambda_L$ du côté des longueurs d'ondes longues ;
   la mesure d'une absorbance $k_0$ de chacun des composants bruts de pré-mélange dans un état où l'eau a été retirée, sur chacun des candidats $\lambda_L$' de longueur d'onde de référence du côté des longueurs d'ondes longues ;
   le calcul d'une valeur moyenne des sommes des carrés de $k_0$, laquelle est une valeur obtenue par division des sommes des carrés des absorbances $k_0$ des composants bruts de pré-mélange respectifs par le nombre de composants bruts de pré-mélange, sur chacun des candidats $\lambda_L$' de longueur d'onde de référence du côté des longueurs d'ondes longues ; et
   la sélection d'une des candidats $\lambda_L$' de longueur d'onde de référence du côté des longueurs d'ondes longues rendant la valeur moyenne des sommes des carrés de $k_0$ inférieure ou égale à 0,001, en tant que longueur d'onde de référence $\lambda_L$ du côté des longueurs d'ondes longues, parmi les candidats $X_L$' de longueur d'onde de référence du côté des longueurs d'ondes longues.

2. Procédé de mesure de teneur en eau d'un composé selon la revendication 1, où

   un des candidats $\lambda_L$' de longueur d'onde de référence du côté des longueurs d'ondes longues rendant minimale la valeur moyenne des sommes des carrés de $k_0$ est sélectionné en tant que longueur d'onde de référence $\lambda_L$ du côté des longueurs d'ondes longues.

3. Procédé de mesure de teneur en eau d'un composé selon la revendication 1, comprenant en outre :

   la supposition de candidats $\lambda_L$' de longueur d'onde de référence du côté des longueurs d'ondes longues, lesquels sont des candidats pour la longueur d'onde de référence $\lambda_L$ du côté des longueurs d'ondes longues ;
   la supposition de candidats $\lambda_S$' de longueur d'onde de référence du côté des longueurs d'ondes courtes, lesquels sont des candidats pour la longueur d'onde de référence $\lambda_S$ du côté des longueurs d'ondes courtes ;
   la supposition de candidats de combinaison de longueurs d'onde de référence, chacun des candidats de combinaison de longueurs d'onde de référence étant obtenu par combinaison de chacun des candidats $\lambda_L$' de longueur d'onde de référence du côté des longueurs d'ondes longues avec chacun des candidats $\lambda_S$' de longueur d'onde de référence du côté des longueurs d'ondes courtes ;
   la mesure de l'absorbance $k_0$ de chacun des composants bruts de pré-mélange dans un état où l'eau a été retirée, pour chaque cas où il est recouru à chacun des candidats de combinaison de longueurs d'onde de référence ;
   le calcul d'une valeur moyenne des sommes des carrés de $k_0$, laquelle est une valeur obtenue par division des sommes des carrés des absorbances $k_0$ des composants bruts de pré-mélange respectifs par le nombre de composants bruts de pré-mélange, pour chaque cas où il est recouru à chacun des candidats de combinaison de longueurs d'onde de référence ; et
   la sélection d'un des candidats de combinaison de longueurs d'onde de référence rendant la valeur moyenne des sommes des carrés de $k_0$ inférieure ou égale à 0,001 en tant que combinaison de longueurs d'onde de référence, parmi les candidats de combinaison de longueurs d'onde de référence.

4. Procédé de mesure de teneur en eau d'un composé selon la revendication 3, où

   un des candidats de combinaison de longueurs d'onde de référence rendant minimale la valeur moyenne des sommes des carrés de $k_0$ est sélectionné en tant que combinaison de longueurs d'onde de référence, parmi les candidats de combinaison de longueurs d'onde de référence.

**5.** Procédé de mesure de teneur en eau d'un composé selon la revendication 1, où
la combinaison de longueurs d'onde de référence est sélectionnée au moyen de filtres passe-bande permettant le passage de longueurs d'onde spécifiques.

**6.** Procédé de mesure de teneur en eau d'un composé selon la revendication 1, où
la combinaison de longueurs d'onde de référence est sélectionnée sur la base d'un résultat d'une mesure par spectroscopie infrarouge avec des longueurs d'onde continues.

**7.** Procédé de mesure de teneur en eau d'un composé selon la revendication 1, où
ledit composé est un composant brut de frittage ;
la longueur d'onde $\lambda_W$ absorbée par l'eau est comprise entre 1,9 $\mu$m et 2,0 $\mu$m ; et
la longueur d'onde de référence $\lambda_L$ du côté des longueurs d'ondes longues est sélectionnée dans une plage de longueur d'onde de 2,2 $\mu$m à 2,4 $\mu$m.

**8.** Procédé de mesure de teneur en eau d'un composé selon la revendication 7, où la longueur d'onde de référence $\lambda_S$ du côté des longueurs d'ondes courtes est sélectionnée dans une plage de longueur d'onde de 1,6 $\mu$m à 1,8 $\mu$m.

**9.** Procédé de mesure de teneur en eau d'un composé selon la revendication 1, ledit procédé comprenant :

la mesure d'une absorbance kc d'un échantillon du composé ;
la mesure d'une teneur en eau wc dans l'échantillon du composé au moyen d'une méthode à masse anhydre ;
le calcul d'un facteur de proportionnalité a par division de l'absorbance kc de l'échantillon du composé par la teneur en eau $w_C$ dans l'échantillon du composé ; et
le calcul de la teneur en eau w dans le composé par division de l'absorbance $k_C$ du composé par le facteur de proportionnalité a.

**10.** Dispositif de mesure de teneur en eau (1) pour un composé, comprenant :

une source lumineuse (2) rayonnant une lumière infrarouge vers le composé ;
des filtres passe-bande (4) transmettant respectivement une longueur d'onde $\lambda_W$ absorbée par l'eau, une longueur d'onde de référence $\lambda_L$ du côté des longueurs d'ondes longues supérieure à la longueur d'onde $\lambda_W$, et une longueur d'onde de référence $\lambda_S$ du côté des longueurs d'ondes courtes inférieure à la longueur d'onde $\lambda_W$ ; un détecteur (3) détectant la lumière infrarouge réfléchie étant passée par les filtres passe-bande ; et
une unité de calcul (5) calculant des réflectances spectrales $r_W$, $r_L$, $r_S$ de la lumière infrarouge sur la base de la lumière infrarouge réfléchie détectée sur $\lambda_W$, $\lambda_L$ et $\lambda_S$, calculant une réflectance spectrale de référence $r_{w0e}$ sur la base de la réflectance spectrale $r_L$ et de la réflectance spectrale rs, calculant une absorbance k du composé sur la base de la réflectance spectrale rw et de la réflectance spectrale de référence $r_{w0e}$, et calculant une teneur en eau w dans le composé à partir d'une relation entre la teneur en eau w et l'absorbance k du composé, préparée sur la base d'une teneur en eau wc et d'une absorbance kc d'un échantillon du composé mesurées préalablement, où le composé est un composant brut de frittage (6) ;
la longueur d'onde $\lambda_W$ absorbée par l'eau est comprise entre 1,9 $\mu$m et 2,0 $\mu$m ;
la longueur d'onde de référence $\lambda_L$ du côté des longueurs d'ondes longues est sélectionnée dans une plage de longueur d'onde de 2,2 $\mu$m à 2,4 $\mu$m ; et
où la longueur d'onde de référence $\lambda_L$ du côté des longueurs d'ondes longues est obtenue par :

la supposition de candidats $\lambda_L$' de longueur d'onde de référence du côté des longueurs d'ondes longues, lesquels sont des candidats pour la longueur d'onde de référence $\lambda_L$ du côté des longueurs d'ondes longues ;
la mesure d'une absorbance $k_0$ de chacun des composants bruts de pré-mélange dans un état où l'eau a été retirée, sur chacun des candidats $\lambda_L$' de longueur d'onde de référence du côté des longueurs d'ondes longues ;
le calcul d'une valeur moyenne des sommes des carrés de $k_0$, laquelle est une valeur obtenue par division des sommes des carrés des absorbances $k_0$ des composants bruts de pré-mélange respectifs par le nombre de composants bruts de pré-mélange, sur chacun des candidats $\lambda_L$' de longueur d'onde de référence du côté des longueurs d'ondes longues, et
la sélection d'un des candidats $\lambda_L$' de longueur d'onde de référence du côté des longueurs d'ondes longues rendant la valeur moyenne des sommes des carrés de $k_0$ inférieure ou égale à 0,001 en tant que longueur d'onde de référence $\lambda_L$ du côté des longueurs d'ondes longues, parmi les candidats $\lambda_L$' de longueur d'onde de référence du côté des longueurs d'ondes longues.

**11.** Dispositif de mesure de teneur en eau selon la revendication 10, où la longueur d'onde de référence $\lambda_S$ du côté des longueurs d'ondes courtes est sélectionnée dans une plage de longueur d'onde de 1,6 $\mu$m à 1,8 $\mu$m.

**12.** Procédé de mesure de teneur en eau d'un composé recourant au dispositif de mesure de teneur en eau selon la revendication 10, ledit procédé comprenant :

le calcul d'un facteur de proportionnalité a par division d'une absorbance kc d'un échantillon du composé mesuré préalablement par une teneur en eau wc dans l'échantillon du composé mesuré préalablement au moyen d'une méthode à masse anhydre ; et

la mesure d'une absorbance k sur un composé donné et la mesure d'une teneur en eau w dans le composé par division de l'absorbance k par le facteur de proportionnalité a.

# FIG. 1

FIG. 2A

FIG. 2B

FIG. 2C

# FIG. 3

# FIG. 4

# FIG. 5

# FIG. 6

FIG. 7

**EP 2 309 252 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008176786 A
- JP S5972047 B
- JP S62839 A
- JP H634532 B
- US 5017787 A